(19) Europäisches Patentamt
European Patent Office
Office européen des brevets

(11) **EP 2 710 186 B1**

(12) **FASCICULE DE BREVET EUROPEEN**

(45) Date de publication et mention de la délivrance du brevet:
**09.01.2019 Bulletin 2019/02**

(21) Numéro de dépôt: **12724740.1**

(22) Date de dépôt: **15.05.2012**

(51) Int Cl.:
*D21H 17/57* (2006.01)     *D21H 19/62* (2006.01)
*D21H 19/82* (2006.01)     *D21H 27/00* (2006.01)

(86) Numéro de dépôt international:
**PCT/IB2012/052417**

(87) Numéro de publication internationale:
**WO 2012/156904 (22.11.2012 Gazette 2012/47)**

(54) **FEUILLE A HAUTE DURABILITE POUR LA FABRICATION DE BILLETS DE BANQUE**

HOCHBESTÄNDIGES BLATT ZUR HERSTELLUNG VON BANKNOTEN

HIGH DURABILITY SHEET FOR BANKNOTE MANUFACTURING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.05.2011 FR 1154324**

(43) Date de publication de la demande:
**26.03.2014 Bulletin 2014/13**

(73) Titulaire: **Oberthur Fiduciaire SAS**
**75008 Paris (FR)**

(72) Inventeur: **GODARD, Vincent**
**F-01800 Villieu-loyes-mollon (FR)**

(74) Mandataire: **Nony**
**11 rue Saint-Georges**
**75009 Paris (FR)**

(56) Documents cités:
**EP-A1- 1 783 273          WO-A1-96/28610**
**FR-A7- 2 000 942          US-A- 5 660 919**
**US-A1- 2010 243 160          US-B1- 6 548 120**

**Description**

La présente invention concerne les papiers de sécurité et plus particulièrement mais non exclusivement ceux destinés à la fabrication des billets de banque, ainsi qu'un procédé de fabrication de tels papiers.

Les billets de banque sont exposés durant leur vie à de nombreuses manipulations et risques de salissures. Afin de leur conférer une haute durabilité, le substrat fibreux est protégé par une ou plusieurs couches d'un revêtement protecteur ayant un effet barrière vis-à-vis des salissures.

Le choix du revêtement protecteur est complexe, car celui-ci doit assurer à la fois une fonction barrière et ne pas nuire outre mesure à l'imprimabilité du papier au cours de la fabrication des billets.

De nombreux revêtements protecteurs ont déjà été divulgués dans l'art antérieur.

Le brevet EP 514 455 B1 divulgue ainsi d'améliorer la résistance à la circulation de billets de banque en imprégnant le substrat fibreux, avant l'impression, d'une composition qui contient un ou plusieurs liants choisis pour leurs caractéristiques mécaniques.

Selon ce brevet, au moins l'une des faces du substrat fibreux est traitée par une composition comprenant une ou plusieurs charges choisies parmi les charges minérales et/ou les pigments plastiques de couchage, et au moins un liant élastomère en une quantité supérieure à 25 parties pour 100 parties de charge en poids sec. Le liant élastomère peut être choisi dans le groupe formé par les dispersions aqueuses de polyuréthane, de copolymère d'acrylate, de copolymère styrène butadiène éventuellement carboxylé, de polymères dont l'un des monomères est l'acrylonitrile ou l'isoprène ou le néoprène, ou leurs mélanges. De préférence, un polyuréthane est utilisé. La charge est de préférence minérale, choisie parmi les silices ou les kaolins. Pour déposer la couche de revêtement, une coucheuse à lame d'air est préférée, afin de respecter le filigrane.

Les papiers réalisés en mettant en oeuvre l'enseignement de ce brevet sont globalement satisfaisants en ce qu'ils présentent une bonne résistance à l'abrasion du papier imprimé ainsi qu'une résistance satisfaisante à la salissure vis-à-vis des graisses et pigments en milieu liquide. Toutefois, leur résistance vis-à-vis des graisses et minéraux en milieu pulvérulent gagnerait à être encore améliorée.

La demande US 2007/0017647 A1 divulgue un papier destiné à la fabrication de billets de banque, ayant une résistance à la salissure améliorée. Selon l'enseignement de cette demande, le revêtement protecteur comporte au moins deux couches appliquées successivement, dont une couche de base qui est en contact avec le substrat fibreux et ferme ses pores et une couche externe qui protège le substrat des influences physiques et chimiques. La couche de base peut comporter du polyuréthane tandis la couche externe est préférentiellement photoréticulable. L'application de la couche de base peut se faire par impression par flexographie. Dans un exemple, la couche de base est une dispersion aqueuse d'un mélange polyuréthane styrène acrylique, tandis que la couche externe est une dispersion aqueuse styrène acrylique. Lorsque la couche externe est réticulable par séchage, celle-ci peut comporter une dispersion aqueuse, de préférence sans polyuréthane, par exemple à base de styrène acrylique.

WO 96/28610 divulgue l'application d'une composition liquide à base de polyuréthane sur un substrat fibreux, afin de former un revêtement protecteur.

US 2006/0127649 indique que l'application d'une composition liquide permet d'obtenir une meilleure résistance aux salissures mais n'améliore pas la stabilité mécanique du substrat.

La demande US 2004/0023008 A1 divulgue un papier de sécurité destiné à la fabrication de billets de banque. Le papier comporte un substrat fibreux qui est revêtu sur l'une au moins de ses faces d'une couche de protection transparente ou translucide comportant de la silice colloïdale et au moins un liant élastomérique transparent ou translucide, comportant par exemple du polyuréthane.

La publication WO 2008/054580 A1 divulgue un procédé pour conférer à un substrat fibreux une résistance à l'humidité et aux salissures, consistant à imprégner le substrat sur deux faces opposées avec une composition aqueuse comportant une ou plusieurs résines thermoplastiques choisies parmi les résines ayant une liaison ester, les résines polyuréthane, polyuréthane fonctionnalisé et les copolymères et mélanges de ces résines. Plus particulièrement, les résines peuvent être choisies parmi les dispersions aqueuses d'un polymère, en particulier ayant des particules de résine choisies parmi les résines polyuréthanes, polyéther-uréthane, uréthane-acrylique et leurs mélanges. Dans une réalisation préférée, la composition qui est appliquée comporte, outre la dispersion aqueuse de polymère, un ou plusieurs pigments tels que du dioxyde de titane et éventuellement un ou plusieurs agents de réticulation.

US 1 499 235 divulgue d'améliorer la résistance à la circulation d'un billet de banque en imprégnant le substrat fibreux d'un latex comportant un copolymère à base de styrène carboxylé et de butadiène.

Le brevet EP 815 321 B1 divulgue un papier destiné à la fabrication de billets de banque, dans lequel une dispersion aqueuse de polyuréthane est déposée sur le substrat fibreux, cette dispersion de polyuréthane étant dépourvue de charges et transparente.

On connaît par ailleurs des papiers à haute durabilité dans lesquels un substrat fibreux est revêtu d'un film de PET lié au substrat par un adhésif à base de polyuréthane, ce film de PET étant lui-même recouvert d'un vernis acrylique, comme décrit dans les publications EP 1 545 902, EP 1 854 641 et EP 1 827 823.

Les solutions connues ne sont pas entièrement satisfaisantes en termes de coût de fabrication et/ou de performances.

US 3 288 632 divulgue un procédé de fabrication de papier glacé, destiné à la fabrication de magazines ou de livres, de forte opacité. Ce procédé comprend l'application successive de deux couches fortement pigmentées. L'enseignement de ce brevet ne peut s'appliquer aux papiers destinés à la fabrication des billets de banque, pour lesquels on ne recherche pas une opacité élevée de la ou des couches en raison de la présence de sécurités qui doivent se voir en lumière transmise ou réfléchie, par exemple de type filigrane, impressions au repère ou fils de sécurité.

EP 1 783 273 divulgue un papier de sécurité à durabilité améliorée, dans lequel une composition contenant une résine fluorée est appliquée en surface. Cette composition peut être mélangée à des composés additionnels.

L'invention vise à réaliser un papier à haute durabilité, notamment destiné à la fabrication de billets de banque, offrant une bonne résistance à la circulation, notamment une bonne résistance à la salissure pulvérulente en milieu sec, aux frottements en milieu humide et à la salissure en milieu humide, capable de satisfaire par ailleurs de façon convenable à toutes les contraintes de fabrication, notamment d'impression.

L'invention vise aussi à produire un papier à haute durabilité qui puisse être fabriqué à un coût relativement faible.

L'invention a ainsi pour objet, selon un premier de ses aspects, une feuille de papier à haute durabilité selon la revendication 1.

La couche d'imprimabilité externe est non fluorée, c'est-à-dire est dépourvue de résines fluorées, notamment de résines comportant les groupements C-F, $CF_2$ ou $CF_3$.

La couche d'imprimabilité externe est destinée à recevoir au moins une impression, par exemple taille douce.

Ainsi, le substrat fibreux n'est pas imprimé directement. L'impression s'effectue sur le revêtement protecteur.

Grâce à l'invention, il est possible de bénéficier d'un papier de résistance à la circulation accrue, et en particulier qui présente à la fois une bonne résistance à la salissure pulvérulente en milieu sec, une bonne résistance des impressions aux frottements et à l'abrasion et une bonne résistance à la salissure en milieu humide, tout en étant compatible avec les techniques d'impression utilisées pour imprimer les billets de banque.

L'invention permet de ne pas utiliser de film encollé ou produit par extrusion, dont la mise en oeuvre augmente significativement le coût de fabrication des feuilles produites. L'invention permet d'utiliser des moyens conventionnels d'enduction, d'imprégnation ou de surfaçage, couramment utilisés dans l'industrie papetière, pour déposer la couche de base et la couche d'imprimabilité externe.

Le revêtement selon l'invention, et en particulier la couche de base, procure une protection du substrat fibreux et une résistance améliorée à la salissure. Contrairement à la plupart des couches appliquées par enduction, imprégnation ou surfaçage en papeterie, qui sont des couches pigmentées opacifiantes pour améliorer l'imprimabilité et l'aspect de surface, les couches du revêtement selon l'invention sont relativement peu ou pas pigmentées, et s'apparentent davantage dans leur composition à des vernis généralement appliqués par des procédés d'impression, donc habituellement hors machine à papier et après impression du papier.

L'épaisseur totale du revêtement de protection est de préférence supérieure ou égale à 3 μm, notamment comprise entre 5 et 25 μm. Le grammage du revêtement de protection est de préférence inférieur ou égal à 25 g/m$^2$ par face.

La couche d'imprimabilité externe comporte avantageusement une charge minérale et/ou de particules polymériques, qui permet d'améliorer l'imprimabilité. La charge minérale et/ou de particules polymériques est de préférence en une teneur massique, en poids sec, par rapport au poids total de la couche d'imprimabilité externe inférieure à 50 %, mieux comprise entre 5 % et 25 %, encore mieux entre 6 % et 10 %. La charge minérale comporte avantageusement de la silice et/ou du kaolin et/ou du talc et/ou du carbonate de calcium. De préférence, la charge minérale et/ou de particules polymériques est non opacifiante grâce à sa transparence naturelle et/ou ses dimensions de l'ordre du micron, notamment inférieures à 10 μm.

La couche d'imprimabilité externe comporte dans un exemple particulier de mise en oeuvre de l'invention une charge de particules polymériques, de préférence organique, par exemple une poudre de polyéthylène, de polyamide, de polypropylène, d'un polymère acrylique ou styrénique.

La couche d'imprimabilité externe est de préférence transparente ou translucide.

La couche d'imprimabilité externe comporte de préférence au moins 25 %, mieux au moins 30 % et plus préférentiellement au moins 50 % en poids sec de polyuréthane et selon une variante particulièrement avantageuse la couche d'imprimabilité externe comporte entre 25 % et 50 % en poids sec de polyuréthane, de préférence mélangé à un composé acrylique, notamment avec des quantités sensiblement égales de polyuréthane et de composé acrylique.

La couche de base comporte une polyoléfine, de préférence du polyéthylène (PE) ou du polyvinylidène chloride (PVDC). En variante, la couche de base comporte du polyuréthane, un polymère acrylique, un polymère styrénique ou un polymère fluoré, par exemple du type polyvinylidène fluoride (PVDF). La couche de base peut être dépourvue de charges, en particulier de charges minérales ou de charges de particules polymériques. De préférence, le polyéthylène est un polyéthylène modifié, notamment comportant des groupements acide et de préférence des groupements acide carboxylique.

L'épaisseur de la couche de base, par face, va par exemple de 1 à 24 $\mu$m. Le grammage de la couche de base va par exemple de 1 à 24 g/m$^2$ et de préférence de 2 à 5 g/m$^2$.

L'épaisseur de la couche externe d'imprimabilité, par face, va par exemple de 1 à 24 $\mu$m. Le grammage de la couche externe va par exemple de 1 à 24 g/m$^2$ et de préférence de 2 à 5 g/m$^2$.

La couche de base est de préférence transparente ou translucide.

Le revêtement peut ne comporter que les deux couches ci-dessus ; en variante, le revêtement peut comporter une ou plusieurs couches intermédiaires, en particulier de nature identique à l'une des couches précitées.

Selon un cas particulier, au moins l'une des couches dudit revêtement comprend un système bicomposant, dit pro polyuréthane. En particulier, ledit système bicomposant met en oeuvre une réaction de polyaddition entre un oligomère isocyanate et un oligomère polyol. En particulier, ledit système bicomposant permet de synthétiser *in situ*, c'est-à-dire sur le substrat, un polyuréthane.

Selon un cas particulier, au moins l'une des couches dudit revêtement comprend un polymère réticulable, en particulier réticulable sous l'effet d'un rayonnement ultraviolet (UV). Selon un cas particulier, ledit polymère réticulable est un polyuréthane.

De préférence, le dépôt de la couche externe d'imprimabilité est effectué en ligne.

Le dépôt de la couche de base et celui de la couche d'imprimabilité externe ont de préférence lieu sur les deux faces du substrat. En particulier on peut utiliser pour déposer lesdites couches tout système de couchage adapté dit couchage deux faces (C-2-S). De préférence, on utilise un système de couchage à lame d'air. Le dépôt peut aussi être réalisé, entre autres, par couchage rideau, par couchage crayon, par couchage à l'aide de rouleaux, en particulier prédosés, gravés ou à transfert, ou encore par trempage, par imprégnation, par surfaçage ou par pulvérisation.

De préférence, le substrat fibreux est recouvert sur chacune de ses faces par le revêtement.

De préférence, le substrat fibreux est imprégné d'un liant permettant de réduire sa porosité, de préférence à base de polyvinyl alcool (PVA). Le PVA est dissous dans l'eau à hauteur de 1 % à 10 % en poids, de préférence entre 3 % et 6 %, avant imprégnation du substrat papier.

Le substrat fibreux peut incorporer au moins un élément de sécurité.

L'invention a encore pour objet, selon un autre de ses aspects, un procédé de fabrication d'une feuille à haute durabilité selon la revendication 9.

Le couchage de la couche externe d'imprimabilité peut s'effectuer sur la couche de base directement, de préférence après séchage de celle-ci.

Selon une caractéristique avantageuse du procédé, le dépôt de la couche de base s'effectue en ligne à l'aide d'une imprégnatrice.

Le substrat fibreux est de préférence encollé préalablement au dépôt de la couche de base, notamment préalablement à son passage dans l'imprégnatrice précitée. L'encollage s'effectue de préférence avec un liant à base de PVA. D'autres liants peuvent être envisagés en complément ou en remplacement du PVA, comme les dispersions à base de polymères styréniques ou acryliques.

La couche de base peut être déposée en une quantité allant de 1 à 24 g/m$^2$ et de préférence entre 2 et 4 g/m$^2$ par face, en poids sec. La couche externe d'imprimabilité peut être déposée en une quantité allant de 1 à 24 g/m$^2$ et de préférence entre 2 et 5 g/m$^2$ par face, en poids sec.

La couche de base peut comporter un polymère choisi parmi les polyuréthanes (PU), les polyoléfines, en particulier le polyéthylène, le PVDC, les polymères acryliques, les polymères styrène et les polymères fluorés, notamment le PVDF, ainsi que leurs mélanges et copolymères.

La couche externe d'imprimabilité comporte de préférence au moins 50% en poids sec de polyuréthane.

La couche externe d'imprimabilité peut comporter au moins 5 % en poids sec d'une charge minérale, notamment de silice et/ou de kaolin et/ou de talc et/ou du carbonate de calcium.

La couche d'imprimabilité externe peut comporter entre 1 et 15 % en poids sec de réticulant, mieux entre 1 et 3 %.

L'invention divulgue encore un procédé de fabrication d'un billet de banque, dans lequel une feuille de papier telle que définie plus haut est imprimée sur sa couche d'imprimabilité externe, notamment par impression taille douce.

**Substrat fibreux**

Le substrat fibreux comporte des fibres papetières et tous additifs convenant à sa fabrication. En particulier, le substrat fibreux de nature principalement cellulosique pourra être renforcé par l'ajout de fibres synthétiques en quantité comprise entre 1 et 50 %, de préférence entre 5 et 15 % en masse.

Le substrat fibreux peut comporter, lorsqu'il est destiné à la fabrication de billets de banque, des fibres cellulosiques et plus particulièrement des fibres de coton. D'autres fibres végétales de plantes annuelles pourront entrer dans la composition du substrat fibreux.

Le substrat fibreux peut présenter un ou plusieurs jets de papier assemblés à l'état humide.

Le substrat fibreux peut présenter, en tant que papier fini et sec, avant encollage et dépôt du revêtement protecteur, un grammage compris entre 20 et 120 g/m$^2$ et une épaisseur comprise entre 30 et 180 µm.

Le substrat fibreux peut comporter un ou plusieurs filigranes ainsi qu'un ou plusieurs éléments de sécurité.

Parmi les éléments de sécurité pouvant être incorporés dans le substrat fibreux, certains sont détectables à l'oeil, en lumière du jour ou en lumière artificielle, sans utilisation d'un appareil particulier. Ces éléments de sécurité comportent par exemple des fibres ou planchettes colorées, des fils imprimés ou métallisés totalement ou partiellement. Ces éléments de sécurité sont dits de premier niveau.

D'autres types d'éléments de sécurité supplémentaires sont détectables seulement à l'aide d'un appareil relativement simple, tel qu'une lampe émettant dans l'ultraviolet (UV) ou l'infrarouge (IR). Ces éléments de sécurité comportent par exemple des fibres, des planchettes, des bandes, des fils ou des particules. Ces éléments de sécurité peuvent être visibles à l'oeil nu ou non, étant par exemple luminescents sous un éclairage d'une lampe de Wood émettant dans une longueur d'onde de 365 nm. Ces éléments de sécurité sont dits de deuxième niveau.

D'autres types d'éléments de sécurité nécessitent pour leur détection un appareil de détection plus sophistiqué. Ces éléments de sécurité sont par exemple capables de générer un signal spécifique lorsqu'ils sont soumis, de manière simultanée ou non, à une ou plusieurs sources d'excitation extérieure. La détection automatique du signal permet d'authentifier, le cas échéant, le document. Ces éléments de sécurité comportent par exemple des traceurs se présentant sous la forme de matières actives, de particules ou de fibres, capables de générer un signal spécifique lorsque ces traceurs sont soumis à une excitation optronique, électrique, magnétique ou électromagnétique. Ces éléments de sécurité sont dits de troisième niveau.

Des réactifs peuvent également être incorporés dans le substrat fibreux, il s'agit par exemple de réactifs chimiques ou biochimiques d'infalsification et/ou d'authentification et/ou d'identification pouvant notamment réagir respectivement avec au moins un agent de falsification et/ou d'authentification et/ou d'identification.

Le ou les éléments de sécurité présents au sein du substrat fibreux, peuvent présenter des caractéristiques de sécurité de premier, de deuxième ou de troisième niveau.

## Revêtement de protection

### Couche de base.

La couche de base comporte tout polymère adapté à conférer des propriétés barrière au revêtement, afin de protéger le substrat fibreux des salissures.

Les propriétés barrières sont équivalentes à celles d'un film plastique. Ainsi la feuille de papier selon l'invention présente notamment une résistance à la salissure équivalente à celle d'un substrat fibreux muni d'un film laminé, contrecollé ou thermoformé.

La couche de base est présente, de préférence, par face à raison de 1 à 24 g/m$^2$ en poids sec, mieux 1 à 15 g/m$^2$, encore mieux 2 à 5 g/m$^2$.

L'épaisseur par face de la couche de base va par exemple de 1 à 24 µm, mieux de 1 à 15 µm, encore mieux de 2 à 5 µm.

La couche de base est déposée sur chaque face à l'état liquide par enduction ou imprégnation, de préférence en ligne sur la machine à papier, de préférence à l'aide d'une imprégnatrice.

La couche de base est initialement, de préférence, une préparation en phase aqueuse, notamment une émulsion ou une dispersion.

La couche de base est à base de polyoléfine ou de PVDC.En variante, un polymère acrylique, styrénique ou fluoré, notamment de type PVDF, peut être utilisé.

Exemple de couche de base à base de PU non couverte par l'invention (dit formule PU pour la suite)

| Composé | Fournisseur | Famille / Fonction | Quantité pour 100 g |
|---|---|---|---|
| Cromelastic SE871 | Cromogenia-Units | Polyuréthane / Liant | 87,9 g |
| Nopco 8034 | Nopco | Tensioactif / Antimousse | 0,1 g |
| Cab-o-sperse PG002 | Cabot | Silice colloïdale / Charge d'imprimabilité | 6,8 g |
| Crosslinker CX100 | Zeneca Resins | Polyaziridine / Réticulant | 2,6 g |
| Eau | N/A | Solvant | 2,6 g |

Exemple de couche de base à base de polyoléfine (dit formule PE pour la suite)

| Composé | Fournisseur | Famille / Fonction | Quantité pour 100 g |
|---|---|---|---|
| Hypod 8502.01 | Dow | Polyéthylène modifié comportant des groupements acide carboxylique/ Liant | 92,0 g |
| Crosslinker CX100 | Zeneca Resins | Polyaziridine / Réticulant | 5,3 g |

Exemple de couche de base à base de PVDC (dit formule PVDC pour la suite)

| Composé | Fournisseur | Famille / Fonction | Quantité pour 100 g |
|---|---|---|---|
| Diofan A 063 | Solvay | PVDC / Liant | 100,0 g |

Pré-encollage

De préférence, le substrat fibreux est pré-encollé avant enduction ou imprégnation avec la composition destinée à former la couche de base.

Le pré-encollage s'effectue de préférence avec un liant à base de PVA. Le polyvinyl alcool est dissous dans l'eau à hauteur de 1% à 10% en masse, de préférence entre 3% et 6%, avant imprégnation du substrat papier. D'autres liants peuvent être envisagés en complément ou en remplacement du PVA, comme les dispersions à base de polymères styréniques ou acryliques, comme mentionné plus haut.

Couche d'imprimabilité externe.

La couche externe est initialement, de préférence, une préparation en phase aqueuse, notamment une émulsion ou une dispersion.

Conformément à l'invention, la couche d'imprimabilité externe est à base de PU.

Le polyuréthane est appliqué, de préférence, sous forme de dispersion aqueuse de particules de polyuréthane ou pro polyuréthane.

Le polyuréthane peut être présent dans la composition destinée à former la couche externe en une teneur massique comprise entre 40 et 100 % par rapport au poids total de la composition.

La composition destinée à former la couche externe peut comporter un réticulant choisi parmi les isocyanates, les carbodiimides ou les aziridines. Le réticulant peut être en une teneur massique, en poids sec, comprise entre 1 et 15 % mieux 1 à 3 %, par rapport au poids total de la composition avant couchage.

La composition destinée à former la couche externe comporte également, de préférence, une charge minérale choisie parmi la silice, le kaolin, le talc ou le carbonate de calcium.

La composition destinée à former la couche externe comporte également, de préférence, une charge dans une proportion massique en poids sec comprise entre 1 et 60 %, mieux 3 et 10 %, par rapport au poids total de la composition.

Exemple de couche d'imprimabilité externe (même formule PU que ci-dessus)

| Composé | Fournisseur | Famille / Fonction | Quantité pour 100 g |
|---|---|---|---|
| Cromelastic SE871 | Cromogenia-Units | Polyuréthane / Liant | 87,9 g |
| Nopco 8034 | Nopco | Tensioactif / Antimousse | 0,1 g |
| Cab-o-sperse PG002 | Cabot | Silice colloïdale / Charge d'imprimabilité | 6,8 g |
| Crosslinker CX100 | Zeneca Resins | Polyaziridine / Réticulant | 2,6 g |
| Eau | N/A | Solvant | 2,6 g |

Moyens d'enduction.

Pour appliquer la couche de base on utilise de préférence, comme mentionné précédemment, une imprégnatrice en ligne, comportant notamment des rouleaux de prédosage, des rouleaux gravés, des rouleaux à transfert avant dosage en sortie.

Pour appliquer la couche externe d'imprimabilité, on utilise de préférence une coucheuse double face à lame d'air, par exemple de type TWIN™ ABC.

De plus, des unités de couchage simultanée par exemple de type TWIN™ ABC, ou à rouleaux, par exemple de type TWIN™ sizer Gravure ou TWIN™ Sizer HSM, peuvent être envisagés pour coucher les deux faces en un seul passage.

L'application de chaque couche, ou éventuellement de l'ensemble des couches, sera suivie d'un séchage, par exemple par air chaud ou infrarouge, possiblement secondé par des rouleaux chauffeurs. La température de surface atteinte sera au minimum de 30°C et au maximum de 180°C, et ce en relation avec le temps de séjour du papier couché dans l'unité de chauffage.

## Exemples

On a réalisé l'exemple 1 non couvert par l'invention et les exemples 2 à 3 selon l'invention ci-après à partir d'un substrat fibreux composé de fibres cellulosiques de coton. Le substrat fibreux est encollé à la sortie de la cuve de formation du papier par trempage dans un bain de PVA dissous à 6 % dans l'eau de façon à déposer 88 g/m$^2$ de PVA en poids sec.

Les caractéristiques des couches déposées et les propriétés obtenues sont détaillées dans les tableaux ci-après.

La première couche (de base) est déposée par imprégnation en presse encolleuse. La deuxième couche (externe) est déposée par couchage crayon.

## Exemple 1

On réalise une feuille comportant le substrat papetier défini ci-dessus, qui est revêtu d'un revêtement de protection bicouche comportant une couche de base à base de PU, déposée à raison de 2,2 g/m$^2$/face en poids sec, et une couche externe à base de PU également, déposée à raison de 5,4 g/m$^2$/face en poids sec.

On obtient les résultats suivants, repris du tableau ci-après :

| Abrasion des encres imprimées | 4,0 | Très bon |
|---|---|---|
| Salissure en phase aqueuse | 3,5 | Bon |
| Salissure pulvérulente | 5,8 | Bon |

## Exemple 2

On réalise une feuille comportant le substrat papetier défini ci-dessus, revêtu d'un revêtement de protection bicouche comportant une couche de base à base de PE, déposée à raison de 2,4 g/m$^2$/face en poids sec et une couche externe à base de PU déposée à raison de 4,8 g/m$^2$/face en poids sec.

On obtient les résultats suivants :

| Abrasion des encres imprimées | 4,5 | Très bon |
|---|---|---|
| Salissure en phase aqueuse | 3,2 | Bon |
| Salissure pulvérulente | 4,6 | Très bon |

## Exemple 3

On réalise une feuille comportant le substrat papetier défini ci-dessus, revêtu d'un revêtement de protection bicouche comportant une couche de base à base de PVDC, déposée à raison de 4,8 g/m$^2$/face en poids sec et une couche externe à base de PU déposée à raison de 4,8 g/m$^2$/face en poids sec.

On obtient les résultats suivants :

| Abrasion des encres imprimées | 4,0 | Très bon |
|---|---|---|
| Salissure en phase aqueuse | 2,8 | Très bon |
| Salissure pulvérulente | 4,4 | Très bon |

### Exemple 4 (comparatif)

On réalise une feuille comportant le substrat papetier des exemples 1 à 3, que l'on enduit d'une couche à base de PU en une quantité de 2,3 g/m²/face en poids sec.
On obtient les résultats suivants :

| Abrasion des encres imprimées | 3,5 | Bon |
|---|---|---|
| Salissure en phase aqueuse | 10,4 | Mauvais |
| Salissure pulvérulente | 10,7 | Mauvais |

### Préparation des exemples 1 à 4

Les compositions des formules PE, PU, PVDC ont été données plus haut

| | Exemples | 1 | 2 | 3 | 4 |
|---|---|---|---|---|---|
| | 1ère couche | Formule PU | Formule PE | Formule PVDC | Formule PU |
| | 2ème couche | Formule PU | Formule PU | Formule PU | - |
| 1ère couche | Dispersion en phase aqueuse | PU | PE | PVDC | PU |
| | pH final | 8,9 | 10,6 | 2,4 | 9,0 |
| | Viscosité Brookfield 100rpm en cps | 122 cps | 193 cps | 37 cps | 122 cps |
| | Procédé d'application | Surfaçage | | | |
| | Température séchage | 105 °C | | | |
| | Durée séchage | 3 min | | | |
| | ES (extrait sec) | 36,6 % | 44,1 % | 50,0 % | 36,6 % |
| | Reprise humide par face | 6,1 g/m² | 5,5 g/m² | 9,7 g/m² | 6,2 g/m² |
| | Repris sèche par face | 2,2 g/m² | 2,4 g/m² | 4,8 g/m² | 2,3 g/m² |

| | | | | | |
|---|---|---|---|---|---|
| 2ème couche | Dispersion en phase aqueuse | PU | | | - |
| | pH final | 8,9 | | | - |
| | Viscosité brookfield 100 Rpm | 103 cps | | | - |
| | Procédé d'application | Couchage crayon | | | - |
| | Température séchage | 105°C | | | - |
| | Durée séchage | 10 min | | | - |
| | ES (extrait sec) | 36,6 % | | | - |
| | Reprise humide par face | 14,7 g/m² | 13,0 g/m² | 13,2 g/m² | - |
| | Reprise sèche par face | 5,4 g/m² | 4,8 g/m² | 4,8 g/m² | - |
| Total | Reprise totale sèche g/m² par face | 7,6 g/m² | 7,2 g/m² | 9,7 g/m² | 2,3 g/m² |

**Exemple 5 (comparatif)**

Il s'agit de la feuille commercialisée sous la référence HYBRID par la société LOUISENTHAL comportant un substrat papetier colaminé avec un revêtement comportant une couche d'adhésif PU à 7,0 g/m$^2$/face, un film de PET à 6,0 g/m$^2$/face et un vernis acrylique à 7,0 g/m$^2$/face.

On obtient les résultats suivants :

| | | |
|---|---|---|
| Abrasion des encres imprimées | 2,5 | Moyen |
| Salissure en phase aqueuse | 0,0 | Très bon (mais tâches sur les bords) |
| Salissure pulvérulente | 6,3 | Moyen |

Performances

| Exemples | | 1 | 2 | 3 | 4 |
|---|---|---|---|---|---|
| 1$^{ère}$ couche | | Formule PU | Formule PE | Formule PVDC | Formule PU |
| 2$^{ème}$ couche | | Formule PU | Formule PU | Formule PU | |
| Grammage | g/m$^2$ | 105,7 | 104,0 | 109,9 | 93,0 |
| Porosité Bendtsen (norme NF D03-076) | ml /min | 0,0 | 0,0 | 0,0 | 0,0 |
| Cobb 1 min (norme ISO 533 : 1991) | g/m$^2$ | 1,4 | 1,0 | 0,7 | 13,9 |
| Crumping sec | ml/min | 0,9 | 2,0 | 1,4 | 21,6 |
| Salissure en phase aqueuse | $I_S$ | 3,5 | 3,2 | 2,8 | 10,4 |
| Lessive basse concentration | Notation | 4,5 | 4,5 | 5,0 | 3,0 |
| Abrasion des encres imprimées | Notation | 4,0 | 4,5 | 4,0 | 3,5 |
| Salissure pulvérulente | $\Delta E^*$ | 5,8 | 4,6 | 4,4 | 10,7 |
| | Grade | 4 | 4/5 | 4/5 | 3 |
| Pelikan | $\Delta E^*$ | 1,6 | 1,6 | 1,4 | 13,8 |
| | Grade | 4,5 | 4,5 | 4,5 | 3,5 |

**Tests de résistance et de durabilité**

Tests de résistance au lavage

Le test de résistance au lavage dit « lessive basse concentration » consiste à placer des échantillons (de dimensions 6,7 cm x 6,7 cm) de papier, imprimés en taille douce sur une face et laissés sécher 8 jours, dans des poches en textile cousues, lesquelles sont introduites dans un bocal mis en rotation pendant 1h à 67 tours par minute (rpm) au contact d'une solution d'eau à 95 °C $\pm$ 2 °C contenant 750 g d'eau et 7,5 g de lessive en poudre de marque ARIEL®. Chaque bocal contient six poches. Après exposition à la lessive, les échantillons sont rincés et essorés avec les doigts.

Les échantillons sont notés de 0 à 5 (5 correspondant à une absence de réduction de l'intensité de l'impression et 0 à la disparition complète de l'image).

Test PELIKAN

Le test PELIKAN consiste à tremper deux échantillons (7 cm x 4 cm) dans une solution d'encre PELIKAN bleue 4001 diluée à 10 % dans de l'eau déminéralisée pendant 10 min, à les retirer et à les placer entre deux buvards, à presser en effectuant deux aller-retour avec un rouleau inox de 10 kg, à laisser sécher complètement et à procéder à l'évaluation de l'écart colorimétrique $\Delta E^*$ (mesure Elrepho USAV395 plaque blanche dans l'espace colorimétrique CIE L*a*b* sous illuminant D65 et observation à 10°, selon la norme NF EN ISO 11664-4) avant et après exposition à l'encre sur chaque face.

| Delta E* | Niveau d'absorption |
|---|---|
| 0 | 5 |
| >0-5 | 4,5 |
| >5-10 | 4 |
| >10-15 | 3,5 |
| >15-20 | 3 |
| >20-25 | 2,5 |
| >25-30 | 2 |
| >30-50 | 1,5 |
| >50 | 1 |

Test de résistance à la salissure en phase aqueuse

On réalise :
- une composition de sueur artificielle A :

| | |
|---|---|
| Eau distillée : | 500g |
| NaCl : | 5 g |
| Acide lactique : | 5 g |
| Urée : | 0,5 g |
| Chlorhydrate d'histidine : | 0,5 g |
| Eau : | qsp 1000 g |

- une composition colorée pulvérulente B :

| | |
|---|---|
| Bayferrox 420 de la société LANXESS (BAYER) : | 0,833 g |
| Bayferrox 610 de la société LANXESS (BAYER) : | 0,833 g |
| Noir microlithe C-K de la société BASF (CIBA) : | 0,083 g |
| Vermiculite 2D de la société EFISOL : | 248,25 g |

Ces composés sont mélangés en utilisant un mélangeur TURBULA pendant 30 min dans une bouteille en plastique avec six grosses billes en céramique.

- une composition grasse C :
On part d'un mélange :

Lanoline Lanor TEC de la société LANOLINES DE LA TOSSEE : 200 g

Disponil TD 0785 de la société NOPCO : 20 g

On homogénéise jusqu'à ce que la lanoline fonde. On ajoute 28 g d'eau en agitant, puis 16 g de Eumulgin BA 10 de la société NOPCO et l'on mélange en chauffant jusqu'à obtenir une préparation homogène. On laisse refroidir à température ambiante, et l'on ajoute 24 g d'eau, en mélangeant pendant 15 min. Puis on ajoute encore 190 g d'eau, très lentement au début. On obtient une émulsion à 42 % de lanoline.
On froisse au préalable chaque échantillon 4 fois manuellement avec l'appareil de froissement IGT.
On monte les échantillons (75 mm x 140 mm) sur des cales en bois (60 x 35 x 35 mm), autour desquelles les échantillons sont maintenus avec trois faces exposées.
On dispose 20 g de composition grasse, 10 g de composition colorée pulvérulente et 90 ml de composition de sueur artificielle et 25 billes de céramique de diamètre 20 mm au maximum dans un bocal en plastique de 2L. On agite puis on introduit les quatre cales en bois, sèches, sur lesquelles les échantillons ont été placés.

Le bocal est fermé et l'on agite au mélangeur TURBULA à 67 rpm pendant 20 min.

On rince ensuite les échantillons à l'eau courante, puis on les fait sécher en utilisant deux buvards, puis un passage au four à 60 °C pendant 3 min.

On repasse ensuite les échantillons entre deux buvards au fer à repasser position 2/3.

On calandre les échantillons un par un avec un passage par côté, à 15 bars de pression, vitesse minimale.

On procède ensuite à l'évaluation de l'indice de salissure Is :

$$I_S = \frac{(B_1 - B_0) + (J_1 - J_0)}{2}$$

où $B_1$ est la blancheur mesurée sur les échantillons après le test, $B_0$ est la blancheur avant le test, $J_1$ est le degré de jaunissement après le test et $J_0$ est le degré de jaunissement avant le test. La blancheur est une valeur moyenne de trois mesures selon la norme NF ISO 2470-2 6167 et le degré de jaunissement est une valeur moyenne de trois mesures (mesure avec l'appareil DATACOLOR ELREPHO 3000 de la société LORENTZEN & WETTRE courante dans le domaine papetier).

Les billes d'alumine ne doivent pas peser moins de 300 g. Elles sont conditionnées avant usage en les plaçant dans la TURBULA avec une crème abrasive et un peu d'eau pendant 1,5h.

Abrasion des encres imprimées

Composition de sueur artificielle : A dont la formule est donnée ci-dessus.

Composition abrasive : Vermiculite 2D de la société EFISOL.

Composition grasse : Même formule que C ci-dessus.

Les échantillons sont imprimés avec une encre bleue S12W de la société SICPA laissée polymériser pendant 8 jours avant le test, l'impression s'effectuant en taille douce.

Les échantillons sont des bandelettes 75 x 140 mm.

On place dans une bouteille de 21 en plastique 20 g de composition grasse, 10 g de composition abrasive et 90 ml de sueur artificielle et 25 billes de céramique de diamètre maximum 20 mm.

Après froissement les échantillons sont montés sur quatre cales en bois comme dans le test précédent.

L'ensemble est entraîné en rotation pendant 20 mn à 67 rpm.

Le rinçage et le séchage des échantillons s'effectuent comme décrit dans le test précédent.

Les résultats sont évalués avec une échelle visuelle allant de 1 à 5 (1 échantillon sévèrement dégradé, 5 absence de détérioration).

Test à la salissure pulvérulente

Equipement

- Bidon de métal (23cm x 23 cm x 33 cm) avec couvercle
- 2 kg de billes de verre de 2,5 mm de diamètre
- Caoutchouc avec filetage mâle et femelle
- Compte goutte
- Perforatrice
- Chiffon propre
- Becher

Composition de la mixture de salissure

| | |
|---|---|
| - Kaolin - Terre thaïlandaise (325 mesh) | 0,3 g |
| - Huile d'olive | 0,4 g |
| - Huile de graines de soja | 0,4 g |
| - Ethanol | 0,4 g |

Préparation des éprouvettes

- Couper les éprouvettes au format billet (sens marche grande longueur)
- Faire un trou à chaque coin à environ 9 mm de chaque angle
- Placer un poids de caoutchouc sur chaque coin et serrer fortement.

Préparation du mélange salissant

- Mélanger 0,3 g de kaolin avec 2000 g de billes de verre
- Ajouter 0,4 g d'huile d'olive, d'huile de graine de soja et d'éthanol
- Mélanger pendant 5 min dans le bidon de métal à 60 tr/min.

Procédure

- Ajouter 20 échantillons dans le bidon de métal
- Faire tourner à 60 rpm (bidon en métal à l'horizontal) pendant 15 min dans un sens puis dans l'autre
- Sortir les échantillons, enlever les poids en caoutchouc
- Essuyer trois fois avec un chiffon humide puis une fois avec un chiffon sec chaque face
- Procéder ensuite à l'évaluation par le calcul de l'écart colorimétrique $\Delta E^*$ (mesure Elrepho USAV395 plaque blanche dans l'espace colorimétrique CIE L\*a\*b\* sous illuminant D65 et observation à 10°, selon la norme NF EN ISO 11664-4) à partir des mesures sur les échantillons avant et après le test.

Les mesures s'effectuent sur cinq emplacements des éprouvettes.

On constate de très bons résultats avec les papiers selon l'invention aux trois tests « Abrasion des encres imprimées », « salissure en phase aqueuse » et « salissure pulvérulente ».

L'invention n'est pas limitée aux exemples illustrés.

L'expression « comportant un » est synonyme de « comportant au moins un ».

**Revendications**

1. Feuille de papier à haute durabilité pour la fabrication de billets de banque, comportant :

   - un substrat fibreux,
   - un revêtement de protection recouvrant en totalité une face au moins du substrat fibreux, ce revêtement comportant au moins une couche de base côté substrat et une couche d'imprimabilité externe non fluorée à base de polyuréthane, recouvrant la couche de base, la couche de base comportant une polyoléfine ou du PVDC.

2. Feuille selon la revendication 1, l'épaisseur totale du revêtement de protection étant supérieure ou égale à 3 $\mu$m, notamment comprise entre 5 et 25 $\mu$m.

3. Feuille selon la revendication 1, 2 ou 3, la couche d'imprimabilité externe comportant une charge minérale et/ou de particules polymériques, notamment en une teneur massique, en poids sec, inférieure à 50 %, mieux comprise entre 5 % et 25 %, encore mieux 6 % et 10 %, au sein de la couche d'imprimabilité externe.

4. Feuille selon la revendication 4, la couche d'imprimabilité externe comportant une charge minérale comportant de la silice et/ou du kaolin et/ou du talc et/ou du carbonate de calcium.

5. Feuille selon l'une quelconque des revendications précédentes, la couche d'imprimabilité externe comportant au moins 25 % en poids sec de polyuréthane, de préférence au moins 30 % en poids sec de polyuréthane, mieux au moins 50 % en poids sec de polyuréthane.

6. Feuille selon l'une quelconque des revendications 1 à 4, la couche d'imprimabilité externe comportant entre 25 % et 50 % de polyuréthane en poids sec, et de préférence un composé acrylique mélangé au polyuréthane, notamment en des proportions sensiblement égales.

7. Feuille selon l'une quelconque des revendications précédentes, la couche de base comportant du PE, mieux du PE modifié comportant des groupements acide, et de préférence des groupements acide carboxylique, ou un polymère fluoré, notamment PVDF, ou acrylique.

8. Feuille selon l'une quelconque des revendications précédentes, le substrat fibreux incorporant au moins un élément de sécurité.

9. Procédé de fabrication d'une feuille à haute durabilité pour billet de banque, comportant l'étape consistant à coucher en ligne à l'état fluide sur un substrat fibreux une couche de base et à coucher en ligne ou hors ligne sur la couche de base une couche d'imprimabilité externe non fluorée à base de polyuréthane, notamment avec des proportions en polyuréthane comprises entre 25 et 50 % en poids sec, de préférence mélangé à un composé acrylique, la couche de base comportant une polyoléfine ou du PVDC, de préférence une polyoléfine, mieux du PE, encore mieux du PE modifié par des groupements acide, de préférence des groupements acide carboxylique.

10. Procédé de fabrication d'une feuille à haute durabilité selon la revendication précédente, le substrat fibreux étant encollé préalablement au dépôt de la couche de base.

11. Procédé selon l'une des revendications 9 ou 10, le dépôt de la couche de base s'effectuant en ligne à l'aide d'une imprégnatrice.

12. Procédé selon l'une des revendications 9 ou 11, le substrat fibreux étant encollé préalablement à son passage dans l'imprégnatrice.

13. Procédé selon la revendication 10 ou la revendication précédente, l'encollage s'effectuant avec du PVA.

14. Procédé selon l'une quelconque des revendications 9 à 13, le couchage de la couche d'imprimabilité externe s'effectuant en ligne.

**Patentansprüche**

1. Hochbeständiges Blatt Papier zur Herstellung von Banknoten, umfassend:

   - ein Fasersubstrat,
   - eine Schutzbeschichtung, die mindestens eine Seite des Fasersubstrats vollständig bedeckt, wobei die Beschichtung mindestens eine Basisschicht auf der Seite des Substrats und eine bedruckbare äußere nicht-fluorierte und auf Polyurethan basierende Schicht aufweist, die die Basisschicht bedeckt, wobei die Basisschicht ein Polyolefin oder PVDC aufweist.

2. Blatt nach Anspruch 1, wobei die Gesamtdicke der Schutzbeschichtung mindestens 3 $\mu$m, insbesondere zwischen 5 und 25 $\mu$m, beträgt.

3. Blatt nach Anspruch 1, 2 oder 3, wobei die bedruckbare äußere Schicht einen mineralischen Füllstoff und/oder Polymerteilchen, insbesondere in einem Trockengewichtsanteil von weniger als 50 %, bevorzugt zwischen 5 % und 25 %, bevorzugter zwischen 6 % und 10 %, innerhalb der bedruckbaren äußeren Schicht aufweist.

4. Blatt nach Anspruch 4, wobei die bedruckbare äußere Schicht einen mineralischen Füllstoff aufweist, der Siliziumdioxid und/oder Kaolin und/oder Talk und/oder Calciumcarbonat enthält.

5. Blatt nach einem der vorhergehenden Ansprüche, wobei die bedruckbare äußere Schicht mindestens 25 Trockengew.-% Polyurethan, bevorzugt mindestens 30 Trockengew.-% Polyurethan, bevorzugter mindestens 50 Trockengew.-% Polyurethan aufweist.

6. Blatt nach einem der Ansprüche 1 bis 4, wobei die bedruckbare äußere Schicht zwischen 25 Trockengew.-% und 50 Trockengew.-% Polyurethan und vorzugsweise eine Acrylzusammensetzung, die mit Polyurethan, insbesondere in im Wesentlichen gleichen Verhältnissen gemischt ist, umfasst.

7. Blatt nach einem der vorhergehenden Ansprüche, wobei die Basisschicht PE, bevorzugt modifiziertes PE, umfassend Säuregruppen und vorzugsweise Carbonsäuregruppen, oder ein fluoriertes Polymer, insbesondere PVDF oder ein Acrylpolymer umfasst.

8. Blatt nach einem der vorhergehenden Ansprüche, wobei das Fasersubstrat mindestens ein Sicherheitselement enthält.

9. Verfahren zur Herstellung eines hochbeständigen Blatts für Banknoten, wobei in dem Verfahren auf ein Fasersubstrat in einem fluiden Zustand in der Fertigungslinie eine Basisschicht aufgelegt wird und auf die Basisschicht innerhalb oder außerhalb der Fertigungslinie eine nicht-fluorierte bedruckbare äußere Schicht auf Basis von Polyurethan aufgelegt wird, insbesondere mit Polyurethan in Anteilen zwischen 25 und 50 Trockengew.-%, vorzugsweise gemischt mit einer Acrylzusammensetzung, wobei die Basisschicht ein Polyolefin oder PVDC umfasst, vorzugsweise ein Polyolefin, bevorzugt PE, noch bevorzugter PE, das durch Säuregruppen, vorzugsweise Carbonsäuregruppen, modifiziert ist.

10. Verfahren zur Herstellung eines hochbeständigen Blatts nach dem vorhergehenden Anspruch, wobei das Fasersubstrat vor dem Aufbringen der Basisschicht beleimt wird.

11. Verfahren nach einem der Ansprüche 9 oder 10, wobei das Aufbringen der Basisschicht in der Fertigungslinie mit Hilfe einer Imprägnieranlage erfolgt.

12. Verfahren nach einem der Ansprüche 9 oder 11, wobei das Fasersubstrat vor seinem Durchgang durch die Imprägnieranlage beleimt wird.

13. Verfahren nach Anspruch 10 oder dem vorhergehenden Anspruch, wobei die Leimung mit PVA erfolgt.

14. Verfahren nach einem der Ansprüche 9 bis 13, wobei das Auflegen der bedruckbaren äußeren Schicht in der Fertigungslinie erfolgt.

## Claims

1. A high-durability sheet of paper for manufacturing bank notes, comprising:

   - a fibrous substrate,
   - a protective coat totally covering at least one face of the fibrous substrate, this coat comprising at least one base layer on the substrate side and a polyurethane-based non-fluorinated outer printability layer, covering the base layer, the base layer comprising a polyolefin or PVDC.

2. The sheet according to claim 1, the total thickness of the protective coat being greater than or equal to 3 $\mu$m, especially between 5 and 25 $\mu$m.

3. The sheet according to claim 1, 2 or 3, the outer printability layer comprising a polymer-particle and/or mineral filler, in particular in a mass content, by dry weight, of less than 50%, better still between 5% and 25% and even better still between 6% and 10%, in the outer printability layer.

4. The sheet according to claim 4, the outer printability layer comprising a mineral filler comprising silica and/or kaolin and/or talc and/or calcium carbonate.

5. The sheet according to any one of the preceding claims, the outer printability layer comprising at least 25% by dry weight of polyurethane, preferably at least 30% by dry weight of polyurethane, better at least 50% by dry weight of polyurethane.

6. The sheet according to any one of claims 1 to 4, the outer printability layer comprising between 25% and 50% by dry weight of polyurethane, and preferably an acrylic compound mixed with polyurethane, in particular in substantially equal proportions.

7. The sheet according to any one of the preceding claims, the base layer comprising PE, better still modified PE comprising acid groups, and preferably carboxylic acid groups, or a fluorinated polymer, especially PVDF, or an acrylic polymer.

8. The sheet according to any one of the preceding claims, the fibrous substrate incorporating at least one security element.

9. A process for manufacturing a high-durability sheet for bank notes, comprising the step consisting in on-line layering in the fluid state on a fibrous substrate of a base layer and in on-line or off-line layering on the base layer of a polyurethane-based non-fluorinated outer printability layer, especially with polyurethane proportions of between 25% and 50% by dry weight, preferably mixed with an acrylic compound, the base layer comprising a polyolefin or PVDC, preferably a polyolefin, better still PE and even better still PE modified with acid groups, preferably carboxylic acid groups.

10. The process for manufacturing a high-durability sheet according to the preceding claim, the fibrous substrate being sized prior to deposition of the base layer.

11. The process according to one of claims 9 or 10, the deposition of the base layer taking place on line using a two-roll treater.

12. The process according to one of claims 9 or 11, the fibrous substrate being sized prior to its passage through the two-roll treater.

13. The process according to claim 10 or the preceding claim, the sizing being performed with PVA.

14. The process according to any one of claims 9 to 13, the layering of the outer printability layer being formed on line.

## RÉFÉRENCES CITÉES DANS LA DESCRIPTION

**Documents brevets cités dans la description**

- EP 514455 B1
- US 20070017647 A1
- WO 9628610 A
- US 20060127649 A
- US 20040023008 A1
- WO 2008054580 A1
- US 1499235 A
- EP 815321 B1
- EP 1545902 A
- EP 1854641 A
- EP 1827823 A
- US 3288632 A
- EP 1783273 A